# FASCICULE DE BREVET EUROPEEN

(11) **EP 1 916 132 B1**
(45) Date de publication et mention de la délivrance du brevet: **10.08.2011**
(21) Numéro de dépôt: 07118765.2
(22) Date de dépôt: 18.10.2007
(51) Int. Cl.: B60J 1/16, E05B 65/08, E05C 9/04

(54) **Dispositif de verrouillage à poignée poussoir et levier pour panneau coulissant, dispositif d'obturation et véhicule automobile correspondants.**
Verriegelungsvorrichtung mit Drückergriff und Hebel für Schiebepaneel eines Kraftfahrzeugs, entsprechende Verschlussvorrichtung und entsprechendes Kraftfahrzeug
Push handle and lever locking device for a sliding panel, corresponding blocking device and automobile.

(30) Priorité: 18.10.2006 FR 0609164
(43) Date de publication de la demande: 30.04.2008
(73) Titulaire: Advanced Comfort Systems France SAS - ACS France, 79300 Bressuire (FR)
(72) Inventeur: Damet, Christophe, 03400, Yzeure (FR)
(74) Mandataire: Bioret, Ludovic

(56) Documents cités:
- EP-A- 1 659 247
- EP-A- 1 700 979
- EP-A1- 1 538 288
- CA-A1- 2 239 610
- DE-A1- 4 400 628
- DE-A1- 10 350 683

## Description

### 1. Domaine de l'invention

Le domaine de l'invention est celui des baies de véhicules automobiles.

Plus précisément, l'invention concerne les dispositifs d'obturation d'une baie ménagée dans la carrosserie d'un véhicule, ou dans une portière du véhicule, et comprenant une partie mobile coulissante, susceptible de libérer ou de fermer une ouverture ménagée dans ces dispositifs.

### 2. Solutions de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Une autre technique a été proposée par le titulaire de la présente demande de brevet. Cette technique est notamment décrite dans les documents de brevet EP - 0 778 168 et EP - 0 857 844. Le dispositif d'obturation (appelé par la suite « baie flush ») présenté dans ces documents comprend un ensemble fixe et une partie mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie « flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP - 1 022 172.

Sur le plan esthétique, la baie « flush » présente, vue de l'extérieur, un aspect lisse, affleurant avec la carrosserie, du fait qu'aucun cadre n'est nécessaire.

Pour assurer un coulissement de la partie mobile, constituée généralement par un panneau transparent, on prévoit par exemple un dispositif de guidage comportant un premier et un second rails de guidage montés fixes sur l'ensemble fixe de la baie (ou structure fixe), de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

L'invention se rapporte plus particulièrement à ce type de dispositif d'obturation appelé « baie flush », à ses variantes et ses perfectionnements.

Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle, mais également plus généralement à tout type d'ouverture composé d'un système de fermeture comprenant au moins un pêne.

### 3. Inconvénients de l'art antérieur

Plusieurs solutions ont été proposées pour le verrouillage du panneau mobile dans la position fermée, et le cas échéant dans des positions d'ouverture choisies. Elles sont souvent peu ergonomiques et/ou pratiques, et nécessitent notamment de procéder à un effort, par exemple de serrage, pour obtenir le verrouillage.

Parmi celles-ci, on connaît une technique présentée dans le document EP-1 659 247, selon laquelle on prévoit au moins un pêne coopérant avec une gâche formée dans un des éléments de support et/ou de guidage, la gâche présentant au moins une rampe, de façon que le passage d'une position verrouillée à une position déverrouillée des moyens de verrouillage entraîne le passage du panneau mobile d'un premier plan vers un second plan, et inversement. Deux pênes peuvent être prévus, pour verrouiller efficacement le panneau mobile en parties haute et basse.

Cette approche est efficace, sur le plan fonctionnel. Cependant, elle reste peu ergonomique, du fait que le déplacement du pêne est perpendiculaire à l'axe de coulissement, ce qui suppose des manipulations peu aisées. Ceci est encore plus vrai dans le cas où deux pênes sont prévus.

### 4. Objectifs de l'invention

L'invention a notamment pour objectif de pallier ces inconvénients de l'art antérieur.

Plus précisément, l'invention a pour objectif de proposer un dispositif de verrouillage d'un panneau coulissant d'une baie, simplifiant les opérations d'ouverture et de fermeture de ce panneau, et le verrouillage de celui-ci en position fermée, et le cas échéant en position ouverte.

L'invention a également pour objectif de fournir un tel dispositif d'obturation d'une baie qui permette un verrouillage, un déverrouillage et un coulissement fiables et sans effort.

Ainsi, un objectif particulier de l'invention est de fournir un tel dispositif, qui permette de commander facilement le coulissement du panneau mobile, quel que soit le sens de déplacement (ouverture ou fermeture), tout en conservant des sécurités quant à sa manipulation, par un enfant en bas âge par exemple.

L'invention a également pour objectif de maximiser le clair de baie et donc de limiter l'épaisseur du cadre du panneau coulissant.

L'invention a encore pour objectif de fournir un tel dispositif d'obturation d'une baie qui reste simple à réaliser, à monter sur une portière ou sur un véhicule.

Un autre objectif de l'invention est de fournir un tel dispositif d'obturation d'une baie qui conserve l'ensemble des avantages des « baies flush » déjà développées par le titulaire de la présente demande, et notamment :
- aspect esthétique affleurant;
- aspects aérodynamiques ;
- facilité et coût réduit de fabrication ;
- facilité et coût réduit de montage.

### 5. Principes généraux de l'invention

Ces objectifs, ainsi que d'autres qui apparaîtront plus clairement par la suite, sont atteints à l'aide d'un dispositif selon la revendication 1.

Ainsi, on transforme un mouvement de translation de la poignée d'actionnement en un mouvement de translation des pênes suivant une direction perpendiculaire à celle de la poignée grâce aux leviers. La poignée peut d'autre part être avantageusement tirée dans une même direction pour déverrouiller le panneau coulissant et le déplacer.

Ainsi, une fois la poignée tirée, un utilisateur d'un tel dispositif de verrouillage peut guider le panneau en coulissement dans un même mouvement.

L'invention permet de verrouiller symétriquement et donc de façon efficace le panneau coulissant sur au moins deux de ses bords opposés en actionnant une seule poignée.

De plus, le fait que les deux pênes se déplacent sur le même axe permet de réduire l'épaisseur du cadre du panneau coulissant par rapport aux techniques antérieures et simplifie aussi la mise en oeuvre du dispositif de verrouillage.

Selon un aspect avantageux, les axes de rotation desdits leviers sont alignés selon un second axe sensiblement parallèle audit premier axe.

Ceci permet de réduire l'épaisseur du cadre du panneau coulissant.

Selon un mode de réalisation avantageux, lesdits leviers présentent un premier bras destiné à venir en contact avec ladite poignée et un deuxième bras articulé en rotation par rapport auxdits moyens de liaison.

Ainsi, les moyens de liaison qui pivotent par rapport au levier peuvent être maintenus orientés suivant la direction de déplacement des pênes.

De façon préférée, lesdits moyens de liaison appartiennent au groupe comprenant les câbles et les tringles.

Selon un aspect avantageux, un dispositif de verrouillage tel que décrit ci-dessus comprend des moyens de rappel tendant à ramener lesdits leviers dans ladite position de repos.

Ainsi, dès que la poignée d'actionnement est relâchée, les pênes sont repoussés dans les logements définis dans le ou les rails ou dans des gâches, de façon à maintenir, automatiquement, le panneau coulissant en position verrouillée.

Selon un autre aspect avantageux complémentaire, lesdits moyens de rappel agissent sur ladite poignée, lesdites leviers et/ou lesdits pênes.

Avantageusement, lesdits moyens de liaison comprennent des moyens de rattrapage de jeu.

Ainsi, on évite le débattement de ces moyens de liaison qui peuvent empêcher le retour de la poignée d'actionnement en position de repos, correspondant à une position verrouillée desdits pênes.

Selon encore un aspect avantageux, les axes desdits leviers définissent une droite sensiblement perpendiculaire à l'axe défini par lesdits pênes.

Ainsi, l'épaisseur du cadre du panneau coulissant dissimulant les leviers peut être réduite suivant la direction de coulissement du panneau.

L'invention concerne encore un véhicule automobile comprenant au moins un tel dispositif d'obturation d'une baie susmentionné.

### 6. Liste des figures

D'autres caractéristiques et avantages de l'invention apparaîtront plus clairement à la lecture de la description suivante de deux modes de réalisation préférentiels, donnés à titre de simples exemples illustratifs et non limitatifs, et des dessins annexés, parmi lesquels :
- la figure 1 est une vue en perspective d'un dispositif d'obturation mettant en oeuvre l'invention;
- les figures 2A et 2B sont une vue agrandie de la poignée du panneau coulissant du dispositif de la figure 1 suivant respectivement une vue de face et de côté;
- la figure 3 est une vue détaillée du mécanisme de verrouillage contrôlé par la poignée de la figure 2 ;
- les figures 4A et 4B illustrent schématiquement le principe de fonctionnement du dispositif de rappel des pênes, respectivement :

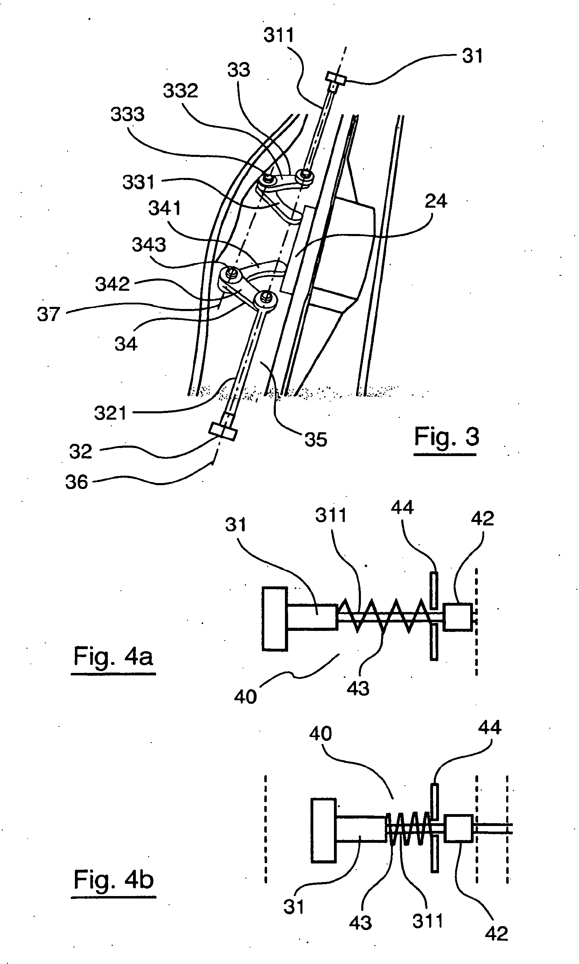

- figure 4A : dans un état verrouillé;
- figure 4B : dans un état déverrouillé

### 7. Description d'un mode de réalisation particulier de l'invention

Comme déjà indiqué, le principe général de l'invention repose notamment sur la mise en oeuvre d'une poignée actionnable parallèlement au plan formé par le panneau coulissant d'une baie de véhicule automobile, et agissant sur une ou des leviers montés sur des axes perpendiculaires à ce plan.

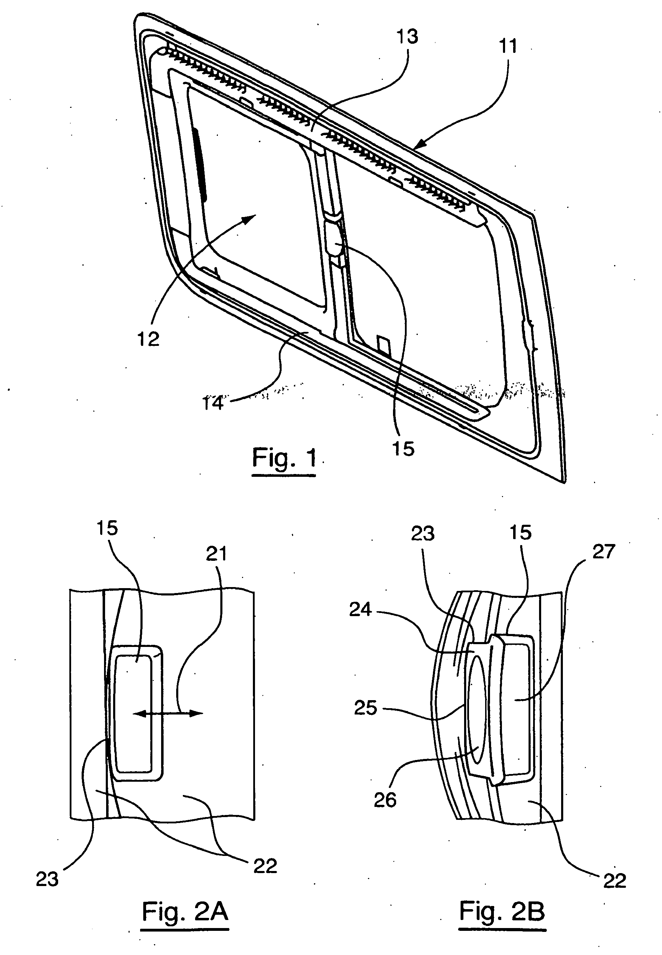

La figure 1 illustre un dispositif d'obturation d'une baie ménagée dans la carrosserie d'un véhicule, mettant en oeuvre un dispositif de verrouillage selon l'invention. Il comprend un ensemble fixe 11 sur lequel est monté un panneau mobile 12, susceptible de coulisser le long de rails 13 et 14 montés en parties supérieure et inférieure de l'ensemble fixe 11. Ces rails sont rapportés sur la face tournée vers l'intérieur du véhicule de l'ensemble fixe.

Le panneau mobile 12, en l'occurrence une vitre délimitée par un cadre, porte deux pênes coopérant respectivement avec les rails supérieur 13 et inférieur 14. Une poignée 15 permet de commander simultanément les deux pênes, comme détaillé par la suite. Il est également possible, dans une version simplifiée, de mettre en oeuvre l'invention avec un seul pêne, en partie supérieure ou en partie inférieure. Il peut également être envisagé de munir la poignée 15 d'un bouton de blocage permettant d'empêcher le mouvement de la poignée pour sécuriser son fonctionnement.

Le dispositif est monté de sorte que le mouvement de verrouillage/déverrouillage de chaque pêne s'inscrive dans un plan parallèle à celui du panneau mobile, et dans une direction perpendiculaire à la direction de coulissement. Dans le mode de réalisation illustré, le panneau 12 est mobile horizontalement et le mouvement de verrouillage/déverrouillage est vertical.

Les figures 2A et 2B présentent de façon plus précise le mécanisme de l'invention, dans un mode de réalisation particulier. Une poignée d'actionnement 15, encore appelée poignée, est montée mobile en translation par rapport au cadre 22 du panneau mobile 12 dans le plan du panneau 12, suivant l'axe de la double flèche 21 (voir figure 2A). En référence à la figure 2B, la poignée 15 peut coulisser dans une ouverture 23 formée dans le cadre 22 et possède une partie d'extrémité 24 comprenant une zone plane 25 et une zone 26 creusée dans son épaisseur. Avantageusement, un logement est défini dans le cadre 22 du panneau mobile 12, pour que la poignée soit sensiblement affleurante avec le reste de ce cadre.

De nombreux designs peuvent être envisagés pour cette poignée et sa cinématique, en fonction des besoins. On peut notamment prévoir des zones 27 facilitant la préhension de la poignée.

La poignée 15 permet de contrôler deux pênes, selon le montage illustré par la figure 3. Les deux pênes 31 et 32 sont situées à l'extrémité de deux moyens de liaison avec les pênes 311 et 321, encore appelées biellettes ou tringles, pouvant coulisser à l'intérieur du cadre 22, et sont montés de façon à coopérer avec les rails 13 et 14 respectivement. Dans un autre mode de réalisation, on peut envisager de remplacer les tringles par d'autres moyens de liaison, tels que des câbles précontraints.

On peut prévoir que le rail soit adapté pour coopérer avec le pêne correspondant en toute position, ou présenter des gâches prévues à cet effet en plusieurs emplacements intermédiaires, ou au moins dans la position fermée du panneau mobile.

Plus précisément, lorsque la poignée 15 est actionnée et est tirée de façon à s'éloigner du cadre 22 pour déverrouiller le panneau 12. La tête d'un premier bras 331 d'un premier levier 33 présentant une forme de « V » et, de façon symétrique, la tête d'un premier bras 341 d'un deuxième levier 34 présentant une forme de « V », qui, dans la position verrouillée, sont logés dans la zone creusée 26 est repoussée par la partie d'extrémité de la poignée 24 en venant en contact de la zone plane 25.

Ceci entraîne le pivotement du premier levier 33 et du deuxième levier 34 et donc des deuxièmes bras 332 et 342 des leviers 33 et 34 respectivement autour des axes 333, 343 (situés sensiblement à la base du « V »), solidaires du cadre 22.

L'extrémité des deuxièmes bras 332, 342 des leviers 33 et 34 étant reliée par une articulation de type pivot aux tringles 311 et 321, la mise en rotation des leviers 33 et 34 entraîne progressivement le déplacement des tringles, guidées dans une gorge 35 du cadre 22, sensiblement selon la direction verticale selon un même axe 36 (avec cependant un léger débattement latéral), et leur rapprochement de la poignée 15.

Les pênes 31 et 32 sont ainsi entraînés en déplacement sensiblement le long d'un premier axe commun 36 par une extrémité des tringles 311 et 321 hors de la gâche et/ou du rail, ce qui permet de déverrouiller le panneau mobile 12.

Cet alignement des tringles 311 et 321 permet de réduire l'épaisseur du cadre, et donc d'augmenter le clair de baie. Il est à noter que cette structure alignée n'est pas évidente à mettre en oeuvre avec une poignée selon l'invention, actionnable dans deux sens indifféremment.

Dans le mode de réalisation illustré, les axes de rotation des leviers 33 et 34 sont alignés selon un second axe 37 parallèle à l'axe 36.

Lorsque la poignée 15 est relâchée, les leviers 33 et 34 reprennent leur position de repos grâce à un dispositif de rappel 40 équipant les pênes et illustré par les figures 4A et 4B. Ce dispositif de rappel 40 permet en effet de maintenir en contact la tête des premiers bras de leviers 331, 341 avec la partie d'extrémité de la poignée 24.

Le dispositif de rappel 40 équipant le pêne 31 comprend un ressort de rappel 43, monté autour de la tringle 311 entre d'une part le pêne 31 et d'autre part un élément fixe de butée 44 prévu à cet effet sur le cadre de la baie. Dans la position verrouillée (figure 4A), le ressort est libre et dans la position déverrouillée (figure 4B), le ressort est comprimé par le pêne 31 du fait de la remontée de la tringle 311. Ainsi lorsque la poignée est relâchée, la tringle 311 et le pêne 31 sont libres de se déplacer, et sous l'action du ressort de rappel 43, le pêne 31 est ramené dans la position verrouillée. Le déplacement du pêne 31 (ou de la tringle 311) entraîne le basculement du levier 33 et plaque la tête du premier bras de levier 331 le long de la poignée d'actionnement 15, tout en ramenant la poignée dans sa position de repos.

Dans une variante de ce mode de réalisation, on peut prévoir des moyens de rappel agissant également et/ou uniquement sur la poignée 15, ou sur au moins un des leviers.

Des moyens de rattrapage de jeu 42 pour compenser le débattement latéral de 1a tringle, constitués par exemple d'un ressort de rappel complémentaire, complètent le dispositif de rappel 40.

Différentes adaptations et modifications peuvent bien sûr être apportées.

La forme et le procédé d'actionnement de la poignée peuvent par exemple être modifiée. Plusieurs logements de verrouillage peuvent également être prévus, pour permettre le blocage du panneau mobile non seulement dans une position fermée, mais également dans une ou plusieurs positions ouvertes prédéterminées.

Le dispositif d'obturation selon l'invention peut équiper une portière de véhicule, un panneau latéral de carrosserie, une porte ou un panneau arrière, un pavillon, etc. Le véhicule peut notamment être un véhicule de tourisme, un véhicule utilitaire, un autocar... Un tel véhicule peut comprendre un ou plusieurs dispositifs d'obturation.

## Revendications

1. Dispositif d'obturation d'une baie pour véhicule automobile, comprenant au moins un panneau (12) mobile en coulissement par rapport à une structure fixe (11), selon un axe de coulissement, et équipé d'un dispositif de verrouillage comprenant deux pênes (31, 32) coopérant chacun avec au moins un élément de verrouillage complémentaire (13, 14) prévu à cet effet sur ladite structure fixe, **caractérisé en ce que** chacun desdits pênes (31, 32) est associé respectivement à un levier (33, 34) monté mobile en rotation, lesdits pênes pouvant se déplacer sensiblement le long d'un premier axe commun (36),
et **en ce qu'**il comprend une poignée d'actionnement (15) mobile en coulissement, selon une direction sensiblement parallèle audit axe de coulissement du panneau coulissant (12), et agissant sur lesdits leviers (33, 34) de façon qu'elle puisse prendre au moins deux positions :
- une position de repos, dans laquelle lesdits pênes (31, 32) sont dans un état verrouillé avec un desdits éléments de verrouillage complémentaires (13, 14) ; et
- une position de déverrouillage, dans laquelle chacun desdits leviers (33, 34) agit respectivement sur des moyens de liaison (311, 321), avec un desdits pênes (31, 32), de façon que ces derniers soient placés dans un état déverrouillé.

2. Dispositif d'obturation d'une baie selon la revendication 1, **caractérisé en ce que** les axes de rotation desdits leviers (33, 34) sont alignés selon un second axe (37) sensiblement parallèle audit premier axe (36).

3. Dispositif d'obturation d'une baie selon l'une quelconque des revendications 1 et 2, **caractérisé en ce qu'**au moins un desdits leviers (33, 34) présente un premier bras (331, 341) destiné à venir en contact avec ladite poignée (15) et un deuxième bras (332, 342) articulé en rotation par rapport auxdits moyens de liaison (311, 321).

4. Dispositif d'obturation d'une baie selon l'une quelconque des revendications 1 à 3, **caractérisée en ce que** lesdits moyens de liaison (311, 321) appartiennent au groupe comprenant les câbles et les tringles.

5. Dispositif d'obturation d'une baie selon l'une quelconque des revendications 1 à 4, **caractérisé en ce qu'**il comprend des moyens de rappel (40) tendant à ramener lesdits leviers (33, 34) dans ladite position de repos.

6. Dispositif d'obturation d'une baie selon la revendication 5, **caractérisé en ce que** lesdits moyens de rappel (40) agissent sur ladite poignée (15), lesdits leviers (33, 34) et/ou lesdits pênes (31, 32).

7. Dispositif d'obturation d'une baie selon l'une quelconque des revendications 1 à 6, **caractérisé en ce que** lesdits moyens de liaison (311, 321) comprennent des moyens de rattrapage de jeu (42).

8. Dispositif d'obturation d'une baie selon l'une quelconque des revendications 1 à 7, **caractérisé en ce que** les axes desdits leviers (33, 34) définissent une droite sensiblement perpendiculaire à l'axe (36) défini par lesdits pênes (31, 32).

9. Véhicule automobile comprenant au moins un dispositif d'obturation d'une baie d'un véhicule automobile selon l'une quelconque des revendications 1 à 8.

## Claims

1. Device for closing an opening, for a motor vehicle, said device comprising at least one panel (12) which is capable of sliding movement in relation to a fixed structure (11) along an axis of sliding, and being equipped with a locking device comprising two bolts (31, 32) each cooperating with at least one complementary locking element (13, 14) provided for that purpose on the said fixed structure;
**characterised in that** each of the said bolts (31, 32) is associated with a lever (33, 34) respectively which is mounted so as to be capable of rotational movement, the said bolts being capable of displacement substantially along a first common axis (36);
and **in that** said device for closing an opening comprises an operating handle (15) which is capable of sliding movement in a direction substantially parallel to the said axis of sliding of the sliding panel (12), and which acts on the said levers (33, 34) in such a way that it can assume at least two positions:
- a rest position, in which the said bolts (31, 32) are in a state in which they are locked with one of the said complementary locking elements (13, 14); and
- an unlocking position, in which each of the said levers (33, 34) acts upon means (311,321) respectively for linking with one of the said bolts (31, 32), in such a way that the latter are brought into an unlocked state.

2. Device for closing an opening according to claim 1, **characterised in that** the axes of rotation of the said levers (33, 34) are aligned along a second axis (37) which is substantially parallel to the said first axis (36) .

3. Device for closing an opening according to either of claims 1 and 2, **characterised in that** at least one of the said levers (33, 34) has a first arm (331, 341) which is intended to come into contact with the said handle (15), and a second arm (332, 342) which is articulated in rotation in relation to the said linking means (311, 321).

4. Device for closing an opening according to any of claims 1 to 3, **characterised in that** the said linking means (311, 321) belong to the unit comprising the cables and rods.

5. Device for closing an opening according to any of claims 1 to 4, **characterised in that** it comprises return means (40) which tend to bring the said levers (33, 34) back into the said rest position.

6. Device for closing an opening according to claim 5, **characterised in that** the said return means (40) act on the said handle (15), the said levers (33, 34) and/or the said bolts (31, 32).

7. Device for closing an opening according to any of claims 1 to 6, **characterised in that** the said linking means (311, 321) comprise means (42) for taking up play.

8. Device for closing an opening according to any of claims 1 to 7, **characterised in that** the axes of the said levers (33, 34) define a straight line which is substantially perpendicular to the axis (36) defined by the said bolts (31, 32).

9. Motor vehicle comprising at least one device for closing an opening in a motor vehicle according to any of claims 1 to 8.

## Patentansprüche

1. Vorrichtung zum Verschließen einer Öffnung eines Kraftfahrzeugs, die mindestens eine Platte (12) aufweist, die in Verschiebung in Bezug zu einer stationären Struktur (11) entlang einer Schiebeachse beweglich und mit einer Verriegelungsvorrichtung ausgerüstet ist, die zwei Riegel (31, 32) aufweist, die jeweils mit mindestens einem ergänzenden Verriegelungselement (13, 14), das dazu auf der stationären Struktur vorgesehen ist, zusammenwirken,
**dadurch gekennzeichnet, dass** jeder der Riegel (31, 32) jeweils mit einem Hebel (33, 34) verbunden ist, der in Drehung beweglich montiert ist, wobei sich die Riegel im Wesentlichen entlang einer gemeinsamen Achse (36) verlagern können,
und dass sie einen Betätigungsgriff (15) aufweist, der durch Schieben entlang einer Richtung im Wesentlichen parallel zu der Schiebeachse der Schiebeplatte (12) beweglich ist und auf die Hebel (33, 34) derart einwirkt, dass sie mindestens zwei Positionen einnehmen kann:
- eine Ruhestellung, in der die Riegel (31, 32) in einem mit einem der ergänzenden Verriegelungselemente (13, 14) verriegelten Zustand sind; und
- eine Entriegelungsstellung, in der jeder der Hebel (33, 34) jeweils auf Verbindungsmittel (311, 321) mit einem der Riegel (31, 32) derart einwirkt, dass diese Letzteren in einen entriegelten Zustand gestellt werden.

2. Vorrichtung zum Verschließen einer Öffnung nach Anspruch 1, **dadurch gekennzeichnet, dass** die Rotationsachsen der Hebel (33, 34) entlang einer zweiten Achse (37), die im Wesentlichen zu der ersten Achse (36) parallel ist, ausgerichtet sind.

3. Vorrichtung zum Verschließen einer Öffnung nach einem der Ansprüche 1 und 2, **dadurch gekennzeichnet, dass** mindestens einer der Hebel (33, 34) einen ersten Arm (331, 341) aufweist, der dazu bestimmt ist, mit dem Griff (15) in Berührung zu kommen, und einen zweiten Arm (332, 342), der in Bezug zu den Verbindungsmitteln (311, 321) in Drehung angelenkt ist.

4. Vorrichtung zum Verschließen einer Öffnung nach einem der Ansprüche 1 bis 3, **dadurch gekennzeichnet, dass** die Verbindungsmittel (311, 321) zu der Gruppe gehören, die Kabel und Gestänge aufweist.

5. Vorrichtung zum Verschließen einer Öffnung nach einem der Ansprüche 1 bis 4, **dadurch gekennzeichnet, dass** sie Rückholmittel (40) aufweist, die die Hebel (33, 34) in die Ruhestellung zurückholen.

6. Vorrichtung zum Verschließen einer Öffnung nach Anspruch 5, **dadurch gekennzeichnet, dass** die Rückholmittel (40) auf den Griff (15), die Hebel (33, 34) und/oder die Riegel (31, 32) einwirken.

7. Vorrichtung zum Verschließen einer Öffnung nach einem der Ansprüche 1 bis 6, **dadurch gekennzeichnet, dass** die Verbindungsmittel (311, 321 ) Mittel zum Nachstellen eines Spiels (42) aufweisen.

8. Vorrichtung zum Verschließen einer Öffnung nach einem der Ansprüche 1 bis 7, **dadurch gekennzeichnet, dass** die Hebel (33, 34) eine Gerade definieren, die im Wesentlichen zu der Achse (36), die von den Riegeln (31, 32) definiert wird, senkrecht steht.

9. Kraftfahrzeug, das mindestens eine Vorrichtung zum Verschließen einer Öffnung eines Kraftfahrzeugs nach einem der Ansprüche 1 bis 8 aufweist.
